# EUROPEAN PATENT APPLICATION

(11) **EP 4 400 942 A1**
(43) Date of publication of application: **17.07.2024**
(21) Application number: 23151415.9
(22) Date of filing: 12.01.2023
(51) Int. Cl.: G06F 3/01, G06F 3/04812, G06F 3/04815, G06F 3/0483

(54) **TOUCHLESS USER INTERFACE CONTROL METHOD, SYSTEM, COMPUTER PROGRAM AND COMPUTER-READABLE MEDIUM**

(71) Applicant: AMERIA AG, 69124 Heidelberg (DE)
(72) Inventor: METTER, Albrecht, 69120 Heidelberg (DE); SCHNEIDER, Franziska, 76275 Ettlingen (DE); SEILER, Martin, 79238 Ehrenkirchen (DE); HIXON, Dennis, 74931 Lobbach (DE); ENSSLEN, Christian, 70469 Stuttgart (DE)
(74) Representative: Best, Bastian

(57) **Abstract**

A computer-implemented touchless user interface control method, the method comprising: providing, using an interface provision means (100), a spatial input area (120) serving as a spatial user interface enabling a user person (400) to provide touchless user input to a scene (210) displayed by an essentially stationary display means (200), the scene being visually perceptible by the user person (400), wherein the position of the spatial input area (120) in space is at least partially made recognizable for the user person (400), wherein the interface provision means (100) is spaced apart from the display means (200); observing, using at least one depth sensing device (110) preferably being integrated in the interface provision means (200), the spatial input area (120) and capturing the touchless user input performed by the user person (400); and generating at least one control command based on the captured touchless user input and modifying the displayed scene (210) in accordance with the at least one control command.

## Description

### TECHNICAL FIELD

The present invention generally relates to controlling a touchless user interface, and more particularly to a touchless user interface control method for providing user input to an essentially stationary display means. Further, the present invention relates to an interface provision means providing a user with a touchless user interface, and to a corresponding system. Further, the present invention relates to a data processing apparatus and to a computer program for carrying out the touchless user interface control method.

### BACKGROUND

Display means have nowadays become omnipresent in various areas of modern life. Examples include electronic display screens or electronic display projectors in public places which provide useful information to the user, e.g., in shopping malls, trade shows, train stations, airports, and the like, a field which is commonly termed "digital signage". Other examples include the use of said displays for presentations, lectures or the like. Presentations and lectures may be performed in private environments, such as at home using a large screen display, e.g., a television device. Also, presentations and lectures may be performed in public environments, e.g., in schools, universities and other educational institutions.

In most presentation applications it is desired to point at specific areas on the display in order to show the audience particularities of a displayed scene, e.g., by catching the attention of the audience to specific parts of a displayed scene. Further, in most presentation applications there may also be a need to control the displayed scene, e.g., by clicking to the next presentation slide of a displayed slide deck, or by freehand drawing on a presentation slide.

With respect to the first desire, i.e., pointing to specific areas, it is often not possible to conveniently use the hand or a telescopic rod for several reasons. On the one hand, the display is often too large for conveniently pointing by a user's hand or by a telescopic rod, and on the other hand, pointing directly at specific areas of a displayed scene by a user's hand or by a telescopic rod forces the user to stand away from the audience and close to the display and also it forces the user to turn away from the audience since it is not possible to look at the audience and the display at the same time.

With respect to the second desire, i.e., controlling the displayed scene, there is also no convenient solution for the user. Often, the mouse or keyboard of a computer is used to control the displayed scene, which is not very convenient during a presentation.

An existing solution which tries to combine these two needs is the so-called presenter device which includes a laser pointer for pointing at specific areas of a scene, and physical buttons or touch buttons for controlling the displayed scene. Such presenter devices have various disadvantages.

Firstly, a laser pointer cannot be used to show something on every display, depending on the display type. For example, a generated dot of a laser pointer cannot be seen well on an LCD or LED display.

Secondly, the functionality of said physical buttons is often limited to "clicking" from one presentation slide to the next presentation slide of a slide deck. It is, e.g., generally not possible to provide freehand drawings on a presentation slide.

Thirdly, not least because of the recent COVID-19 pandemic, users have become hesitant to use physical control means when multiple people interact may use them. Therefore, physical buttons or touch buttons are not preferred.

Fourthly, as for presentations, a high precision of input is desirable which cannot be provided by said presenter devices. Rather, said presenter devices, first need to be aligned with the displayed scene by randomly activating the laser until seeing the laser dot and subsequently positioning the laser dot at a desired area on the displayed scene.

Fifthly, the usability of such presenter devices is not very high, especially since there are numerous different presenter devices with different key positions and key configurations, so that a user must first familiarize with them before starting a presentation. In other words, the user experience is not intuitive.

Therefore, there is a need to provide a method that fulfills at least partially said requirements and at the same time provides a positive user experience. Existing solutions are either not suitable for presentations or are not convenient due to non-intuitive control configurations.

It is therefore the technical problem underlying the present invention to provide an improved touchless user interface control method and thereby overcome the above-mentioned disadvantages of the prior art at least in part.

### SUMMARY OF INVENTION

The problem is solved by the subject-matter defined in the independent claims. Advantageous modifications of embodiments of the invention are defined in the dependent claims as well as in the description and the figures.

According to a first aspect of the present invention, a computer-implemented touchless user interface control method is provided. The method may comprise providing, using an interface provision means, a spatial input area serving as a spatial user interface enabling a user person to provide touchless user input to a scene or for interacting with a scene displayed by an essentially stationary display means. The scene may be displayed by the essentially stationary display means, the scene being visually perceptible by the user person. The position of the spatial input area in space may at least partially be made recognizable for the user person. The interface provision means may be spaced apart from the display means. The method may provide observing, using at least one depth sensing device, the spatial input area and capturing the touchless user input performed by the user person. The at least one depth sensing device may be part of the interface provision means, preferably integrated in the interface provision means, and thus preferably also being spaced apart from the essentially stationary display means. The method may provide generating at least one control command based on the captured touchless user input and modifying the displayed scene in accordance with the at least one control command.

As described above, the starting point of the method according to the first aspect of the present invention is displaying, using an essentially stationary display means, a scene which is visually perceptible by a user person. Examples for essentially stationary display means are projector assemblies including a projector and a projection surface, electronic display screens such as LCD screens or LED screens, and holographic display means.

The essentially stationary display means may in particular be a large display means, for example having a display size of more than 50 inches, preferably more than 60 inches, preferably more than 70 inches, preferably more than 80 inches, preferably more than 90 inches, preferably more than 100 inches, preferably more than 120 inches, preferably more than 150 inches, preferably more than 200 inches. The essentially stationary display means may in particular have a size such that an average user person is not able to reach every part of a displayed scene using a hand for the purpose of pointing at a specific area of the scene.

Display means of such big size are particularly advantageous for presentations. Therefore, the scene displayed by the display means may for example include content such as presentation slides, photos, videos, text, diagrams, or the like. The display means, despite their bulky size, can be conveniently and intuitively operated by means of the present invention, which is described in more detail below.

The interface provision means may be understood as a device or assembly which is configured to provide the user person with a user interface which is a spatial user interface for interacting with a displayed scene which is displayed by the display means without requiring a physical touch. The term touchless user interface and spatial user interface may therefore be understood as synonyms. For this purpose, the interface provision means may include at least one depth sensing device which observes a spatial input area which preferably builds the spatial user interface. Accordingly, the at least one depth sensing device may capture touchless user input provided by the user person within the spatial input area.

Preferably, the at least one depth sensing device may be integrated in the interface provision means, e.g., being arranged in a housing of the interface provision means or being mounted at a housing of the interface provision means. The interface provision means may be a physical device. Particular embodiments of interface provision means are described further below.

The term spatial input area may be understood as comprising or being a virtual plane defined in space which virtual plane may be understood as a virtual touchpad which does not require physical touch during a user interaction. Alternatively or additionally, the term spatial input area may be understood as a space within which user interaction is captured, as described above. The spatial input area, preferably the virtual plane, may be essentially parallel to the scene displayed by the display means, preferably essentially parallel to the display means. Alternatively or additionally, the spatial input area, preferably the virtual plane, may be tilted, i.e., inclined, with respect to the scene displayed by the display means, preferably tilted, i.e., inclined, with respect to the display means. In case if the spatial input area, preferably the virtual plane, is tilted with respect to the scene and/or the display means, the spatial input area may have a spatial orientation that is particularly convenient for the user person for providing user input. It may be provided that the user person is provided with a control option to adjust the spatial orientation of the spatial input area.

Advantageously, the interface provision means may be configured to at least partially make the spatial input area in space recognizable for the user person. For this purpose, different types and shapes of interface provision means are possible, such as a physical framing wherein the framing delimits the spatial input area. Such physical framing may for example be called "airframe" because it delimits a space in the air in front of the user person which is meant to build the spatial user interface. Alternatively, the interface provision means may have two physical towers each delimiting the spatial input area from one opposing side, in other words, a physical framing with only a left and a right portion. Alternatively, the interface provision means may be for example a laser projector or a holographic projector which indicates the spatial input area. Alternatively, the interface provision means may be an augmented reality device, such as an augmented reality glasses, which indicates to the user person where the spatial input area is located in space. Further details and embodiments are described further below.

The term touchless user input may include any touchless action performed by a user person intending to interact with a displayed scene. Touchless user input may be provided by a user person using an input object. The input object may be any kind of suitable input object such as a hand or a finger of a user person, a dedicated input device which may for example be a pen or a spherical device.

The interface provision means, preferably including the at least one depth sensing device, may be separate from the essentially stationary display means, in particular being arranged separately. For example, the interface provision means and the essentially stationary display means may not have a physical contact, e.g., with respect to their housings.

Preferably, the interface provision means and the essentially stationary display means may be spaced apart from each other, e.g., in such manner that the user person is able to see the entire scene which is displayed by the display means essentially without moving the user person's body, in particular essentially without moving the user person's head, and/or in such manner that a different person may move between the interface provision means and the essentially stationary display means, and/or is such manner that the distance between the interface provision means and the essentially stationary display means is more than 1 meter, preferably more than 1,5 meters, preferably more than 2 meters, preferably more than 3 meters, preferably more than 4 meters, preferably more than 5 meters, preferably more than 7 meters, preferably more than 10 meters.

The at least one depth sensing device may be a sensor device, a sensor assembly or a sensor array which is able to capture the relevant information in order to translate a movement and/or position and/or orientation of an input object, in particular of a user person's hand, into at least one control command. In particular, depth information may be capturable by the depth sensing device. It may be placed such as to observe the spatial input area. In a preferred embodiment, at least two depth sensing devices are provided and placed such as to observe the spatial input area. Preferably, if at least two depth sensing devices are used, the depth sensing devices may be arranged facing each other having an overlap in their field of view, each at least partially covering the spatial input area. The depth sensing device may preferably be a depth camera. An example for a depth camera is the Intel RealSense depth camera.

The at least one depth sensing device may, as described above, be part of the interface provision means or be integrated in the interface provision means or be mounted at the interface provision means. Therefore, also the at least one depth camera and the essentially stationary display means may be spaced apart from each other in the same manner as described above with respect to the interface provision means and the essentially stationary display means.

The term control command may be understood as any command that may be derived from a user input. In particular, a control command may be generated based on a translation of a captured user input into a control command. Examples for control commands are "show hovering pointer which overlays the current scene" or "switch to the next page or slide in the presentation".

The term modifying the displayed scene may be understood as any modification of a displayed scene which is caused by a captured user input, i.e., by generated control commands which were generated based on captured user input, as described above. Examples for modifications of a displayed scene are: Showing a hovering pointer which overlays a current scene; turning a page to the next one; switching from a currently shown slide to a next slide of a presentation; overlay a current scene with a freehand drawing; mark specific keywords; zoom in; zoom out; and the like.

Generating at least one control command may be performed based on at least a part of the captured orientation and/or position and/or movement of an input object which the user uses for providing user input, in particular based on an underlying control scheme. The input object may for example be the user's hand. Said control scheme may include information about which respective orientation and/or position and/or movement of the input object should be translated into which control commands.

It may be provided that the control scheme is predefined. Optionally, at least two control schemes are predefined and available for the user person to choose from. Alternatively or additionally, the control scheme may at least partially be adaptable by the user person. By that, the control scheme can be tailored to the user's needs, preferences and physical abilities, for example if the user person is handicapped. This increases the versatility of the present invention and creates a wide range of possible usage options.

It may be provided that the control commands include at least two control command types, preferably including hovering pointer commands and gesture input commands. These control command types are described in further detail below.

It may be provided that the spatial input area and captured user input which is performed within the spatial input area is mapped to the displayed scene. The spatial input area may be defined to be a virtual plane in space. The mapping may follow one or more rules.

In a first example, the spatial input area may have essentially the same width-to-height ratio as the displayed scene, and preferably as the display means. Described in formulas, the width-to-height ratio of the spatial input area is r and the width-to-height ratio of the scene and/or display device is R, with r = R. In this example, the spatial input area may be mapped to the displayed scene and/or to the display means essentially without changing the width-to-height ratio.

In a second example, the spatial input area may have a different width-to-height ratio than the displayed scene, and preferably as the display means. Described in formulas, the width-to-height ratio of the spatial input area is r and the width-to-height ratio of the scene and/or display device is R, with r ≠ R. In this example, mapping may follow underlying mapping rules which fit the different width-to-height ratios to one another in order to provide an optimum user experience.

The interface provision means may be connected to the display means in order to communicate with each other. The connection may be wired or wirelessly. The display means and/or the interface provision means may comprise a computer as a main processing unit for the present invention.

The present invention is applicable to various fields of application and is particularly advantageous for presenting content to participant persons and/or an audience. In particular, experience and testing have shown that the intuitively designed touchless user interface control method according to the present invention provides a particularly appealing and easy to learn user experience. Further, based on the at least one control command, pointing to specific areas on a scene as well as controlling a scene is combined in one single control scheme which is provided by the present invention. Especially for large screens, the present invention provides a high benefit over the prior art because even though the user person and the interface provision means are spaced apart from the display means, it is still possible to process user input. Due to the interface provision means that makes the spatial input area at least partially recognizable by the user person, the user experience is enhanced because this feature supports the user person during interaction and significantly reduces the need to become familiar with the control method in beforehand.

Generating at least one control command based on orientation and/or position and/or movement of an input object, e.g., a user's hand, is particularly smooth and can be performed continuously without interruptions, jumps or leaps, if the input object is detected and successively tracked during a user interaction. In other words, an input object may be detected and the step of capturing user input may be locked to the detected input object. Thus, during an interaction of the user person, the input object or hand may move around and change continuously its position which may occasionally result in control interruptions and thus negatively affect the user experience. By detecting and tracking the input object, such interruptions are avoided for the benefit of the user experience. Once the input object is detected, losing or confusing the input object with other body parts or objects is efficiently avoided.

For detecting the input object and locking the input object for the purpose of capturing user input, a locking condition may be required to be met. Such locking condition may require the user person to perform a specific user input, such as a gesture, successive gestures, pressing a button, input voice commands and/or the like. For example, a detected hand of a user person may be initially displayed on the display means before the locking condition is met, so that the user person can easily see and decide whether the correct hand which is intended for interaction is detected and locked. Based on the initially displayed hand, the user person may perform a gesture, for example a double click gesture moving the hand back and forth, if such gesture is set to be the locking condition. After locking the input object or the hand, the at least one depth sensing device may seamlessly continue tracking the input object upon re-entering the input object into the spatial input area, after the input object was previously moved out of the spatial input area. This can be realized by detecting and processing at least partially the shape of the input object or by detecting and processing one or more characteristics of the user's input object, e.g., hand.

It may be provided that the user person can choose between different locking conditions and/or define individual locking conditions. For example, old persons may not be able to perform certain gestures, such as fast double click gestures, due to handicaps. By the individualization option with respect to the association condition, the usability is enhanced.

It may be provided that the input object is a hand of the user person. In particular, the user person may use the index finger to intuitively provide user input.

It may be provided that the interface provision means comprises an assisting display, the assisting display displaying a visual control aid being visually perceptible by the user person, wherein the visual control aid provides the user person with an indication of captured user input, optionally wherein the visual control aid is a representation of the user person's hand that the user person uses for providing user input.

The assisting display may preferably be the electronic display of a mobile device which is used as an assisting device. Said mobile device may be placed into a holding structure of the interface provision means, e.g., if the interface provision means is part of or mounted on a table, a lectern, a speaker's desk or the like. The holding structure may be configured to facilitate a predefined positioning of the mobile device with respect to the interface provision means and/or with respect to the display means.

The visual control aid may be displayed on said assisting display, in particular on said electronic display of a mobile device. The visual control aid may include a visual indication of the approximate position of the input object and/or the approximate direction in which the input object points.

Said visual indication of the approximate position and/or pointing direction of the input object may be implemented in various forms. In a first example, the visual indication may be a dot shown on the assisting display, wherein the dot moves on the assisting display to indicate the position of the input object and/or wherein the dot changes its shape to indicate the direction in which the input object points. The change in shape may, e.g., include a small arrow or triangle in the middle of the dot or on one side of the dot which corresponds to the direction in which the input object points. In a second example, the visual indication may be a triangle or arrow, wherein the triangle or arrow moves on the assisting display to indicate the position of the input object, and/or wherein the triangle or arrow changes its pointing direction to indicate the direction in which the input object points.

The visual control aid may include a visually perceptible virtual representation, preferably illustration, of the input object that the user uses for providing user input, optionally wherein the input object is a user's hand and the virtual representation having the shape of a hand.

For this purpose, for example, the input object may be rendered and displayed by the assisting display corresponding to the real input object. In case that the input object is a user person's hand, the shape of the hand may be rendered and displayed by the assisting display. The virtual representation of the input object may preferably be a 3D-illustration. This is particularly easy to understand also for unexperienced user persons and therefore provides an intuitive user experience.

The visual control aid may include a visually perceptible virtual representation of the spatial input area, wherein the approximate position of the input object and/or the approximate direction in which the input object points is indicated with respect to the virtual representation of the spatial input area.

An example for such visually perceptible virtual representation of the spatial input area is a 3D-plane which is shown on the assisting display. Such 3D-plane may have for example a square or rectangular shape. The 3D-plane may further be shown as a grid in order to visualize the spatial input area more clearly.

The assisting display may display a scene which essentially corresponds, preferably which is identical, to the scene displayed by the essentially stationary display means.

Of course, the scene displayed by the display means may for example be a stream of the scene displayed by the assisting display. Thus, the scene displayed on the assisting display and the scene displayed on the display means may be the same. In this case, the above-mentioned visual indication and/or virtual representation of the input object and/or the virtual representation of the spatial input area may overlay the scene displayed on the assisting display.

It may be provided that the above-mentioned visual indication and/or virtual representation of the input object and/or the virtual representation of the spatial input area are only shown on the assisting display and not shown by the display means. Instead, it may be provided that while the assisting display shows the above-mentioned visual indication and/or virtual representation of the input object and/or the virtual representation of the spatial input area, the display means shows the scene and an overlaying pointer, i.e., cursor. The position and/or shape and/or color of the overlaying pointer, i.e., cursor may be dependent on the user input, i.e., the generated control commands and thus be in analogy to the visual indication and/or virtual representation of the input object and/or the virtual representation of the spatial input area which are only shown on the assisting display.

It may be provided that the interface provision means is or comprises a physical framing having a shape that at least partially frames the spatial input area.

By means of said framing, the spatial input area may inherently be made at least partially recognizable for the user person. The physical framing can be shaped as a window frame, with only air between the frame parts. Such a physical framing can be called, for example, "airframe". Of course, one or more side parts of such framing shaped as a window frame may be omitted in order prevent the user person from bumping into unnecessary side parts and negatively affecting or limiting the user's freedom to move when performing user input.

It may be provided in a preferred embodiment that the physical framing comprises an essentially vertical left tower and an essentially vertical right tower, wherein the left and the right tower oppose each other such that the spatial input area is located between the left tower and the right tower, optionally wherein at least one depth sensing device is integrated in the left tower and/or at least one depth sensing device is integrated in the right tower.

The term tower may be understood as a vertically elongated structure. In particular, echoing the above-mentioned physical framing having the shape of a window, the essentially vertical left tower and the essentially vertical right tower may be a left and right part of such framing. Said physical framing, independent of a specific shape, may be part or may be mountable on a lectern and/or speaker's desk and/or table desk.

The embodiment of the physical framing comprising an essentially vertical left tower and an essentially vertical right tower is, according to various testing, found particularly convenient to use in terms of freedom to move while providing user input, at the same time providing enough indication for a user person in order to recognize where the spatial input area is located and how the spatial input area is oriented in space. As described further below, the orientation of the spatial input area may be adjustable by the user person. In other words, the interface provision means and/or at least one of the at least one depth camera(s) may provide a control option to the user person for adjusting the spatial orientation of the spatial input area. For example, the control option may be realized by providing a physical button or touch button or by providing predefined gestures which the user person may perform in order to change the spatial orientation of the spatial input area. Accordingly, it may be provided that the position and/or orientation of the interface provision means, in particular of the physical framing, is automatically adjusted depending on the spatial orientation of the spatial input area. In other words, it may be provided that the spatial orientation of the spatial input area, preferably being a virtual plane in space, is adjustable by the user person, wherein adjusting the position and/or orientation of the interface provision means, in particular of the physical framing, is performed under consideration of the spatial orientation of the spatial input area. The adjustment of the position and/or orientation of the interface provision means, in particular of the physical framing may be possible manually by the user person and/or automatically. The interface provision means, in particular the physical framing may therefore include adjustment means, e.g., a tilting joint and/or a hinge.

It may be provided that the interface provision means comprises a projector, preferably a laser projector and/or a hologram projector, the projector emitting light at least partially being indicative of the location, e.g., position and orientation, of the spatial input area.

As described above, the spatial orientation of the spatial input area may be adjustable. In this case, also the projector may be configured to accordingly adjust the position and/or orientation of the emitted light that is indicative of the location, e.g., position and orientation, of the spatial input area.

It may be provided that the interface provision means comprises an augmented reality device, preferably a wearable augmented reality device such as an augmented reality glasses, the augmented reality device providing an indication to the user person at least partially being indicative of the location, e.g., position and orientation, of the spatial input area.

As described above, the spatial orientation of the spatial input area may be adjustable. In this case, also the augmented reality device may be configured to accordingly adjust the indication that is indicative of the location, e.g., position and orientation, of the spatial input area.

It may be provided that the interface provision means, preferably including the at least one depth sensing device, is operable in a sleep-mode and in an active-mode, wherein in the sleep-mode, the interface provision means is at least partially deactivated in order to save energy and switches into the active-mode in response to a wakeup user action, optionally wherein the interface provision means automatically switches from the active-mode into the sleep-mode after a predetermined time period of inactivity and/or in response to a sleep user action.

Providing a sleep-mode is particularly advantageous with respect to saving energy. Further, a sleep-mode is advantageous with respect to preventing too much heat to be produced by the operation of the devices used.

It may be provided that the spatial input area is or comprises a virtual plane defined in space which virtual plane may form a virtual touchpad which does not require physical touch during a user interaction.

The virtual plane may have boundary limits which at least partially delimit the spatial input area. In particular, if the visual control aid, as described above, includes a visually perceptible virtual representation of the spatial input area, this virtual representation may consist of or comprise an illustration of said boundary limits.

It may be further provided that during a user interaction where touchless user input is captured which is provided by the user person via an input object, preferably via a hand of the user person, the captured distance of the input object with respect to the virtual plane and the position of the input object relative to the plane and/or the movement of the input object relative to the plane is processed and generating at least one control command is performed based thereon.

It may be provided that one or more of the following types of control commands may be generated based on user input: hovering pointer commands causing modifying the displayed scene by displaying a hovering pointer which overlays the scene in a respective position, preferably wherein a captured user input is determined to be a hovering pointer command if the user person points with at least a portion of the user person's hand within the spatial input area; gesture input commands, such as click input commands, causing modifying the displayed scene in that said scene changes according to the gesture, preferably wherein a captured user input is determined to be a gesture input command if the user person performs a gesture movement with the user person's hand within the spatial input area.

The types of control commands may be defined in a control scheme, as described above. In particular, said control scheme may include information about which respective orientation and/or position and/or movement of the input object should be translated into which control commands. It may be provided that the control scheme is predefined. Optionally, at least two control schemes are predefined and available for the user person to choose from.

Alternatively or additionally, the control scheme may at least partially be adaptable by the user person.

One example for a user input which causes generating a hovering pointer command is that the input object is moved with respect to the spatial input area while essentially not penetrating more than a threshold value in the direction perpendicular to a virtual plane of the spatial input area and/or in the direction perpendicular to the scene displayed by the display means.

One example for a user input which causes generating a gesture input command being a click input command is that the input object is moved in the direction perpendicular to a virtual plane of the spatial input area and/or in the direction perpendicular to the scene displayed by the display means wherein the movement exceeds a threshold. Preferably, also a double click input command may be provided by performing said movement twice within a predefined time period.

As described above, the spatial input area, preferably the virtual plane, may be essentially parallel to the scene and/or to the display means. Alternatively or additionally, the spatial input area, preferably the virtual plane, may be tilted, i.e., inclined, with respect to the scene displayed by the display means, preferably tilted, i.e., inclined, with respect to the display means. In case if the spatial input area, preferably the virtual plane, is tilted with respect to the scene and/or the display means, the spatial input area may have a spatial orientation that is particularly convenient for the user person for providing user input. Thus, it may be provided that the user person is provided with a control option to adjust the spatial orientation of the spatial input area. Said control option may be provided by the interface provision means and/or by at least one of the at least one depth camera(s), e.g., by providing a physical button or touch button or by providing predefined gestures which the user person may perform in order to change the spatial orientation of the spatial input area. Further, it may be provided that the above-mentioned hovering input command(s) and gesture input command(s) are automatically adjusted depending on the spatial orientation of the spatial input area. In other words, it may be provided that the spatial orientation of the spatial input area, preferably being a virtual plane in space, is adjustable by the user person, wherein capturing user input and/or generating at least one control command is performed considering the spatial orientation of the spatial input area.

It may be provided that the spatial input area, preferably being defined as a virtual plane defined in space, is mapped to the displayed scene and captured user input is mapped accordingly.

It may be provided that the interface provision means comprises at least two depth sensing devices, each at least partially observing the spatial input area and capturing user input, wherein a combination of the captured data of the at least two depth sensing devices is performed in order to recognize the user input and to generate control command(s) based on the user input, optionally wherein the depth sensing devices are depth cameras.

Using at least two, preferably more than two depth sensing devices advantageously enhances the precision of capturing user input. This is due to the fact that each depth sensing device may observe at least part of the spatial input area, i.e., some parts of the spatial input area may be even observed by more than one depth sensing device. The captured image data from different depth sensing devices may be overlayed, i.e., merged together in order to get a high resolution of captured user input in the spatial input area.

According to a second aspect of the present invention, an interface provision means, in particular for use in a method according to the first aspect of the present invention, may be provided. The interface provision means may provide at least two depth sensing devices being arranged essentially opposing each other and being configured for observing a spatial input area and capturing touchless user input performed by the user person. The interface provision means may provide at least one interface indication means being configured to provide an indication to the user person at least partially being indicative of the location of the spatial input area, wherein the interface indication means preferably includes one or more of the following:
a physical framing having a shape that at least partially frames the spatial input area, preferably an essentially vertical left tower and an essentially vertical right tower, wherein the left and the right tower oppose each other such that the spatial input area is located between the left tower and the right tower, optionally wherein in each of the towers at least one of the at least two depth sensing devices may be mounted or integrated;
a projector, preferably a laser projector and/or a hologram projector, the projector emitting light at least partially being indicative of the location of the spatial input area,
an augmented reality device, preferably a wearable augmented reality device such as an augmented reality glasses, the augmented reality device providing an indication to the user person at least partially being indicative of the location of the spatial input area.

The interface provision means may comprise a connection interface to a computer and/or a connection interface to an essentially stationary display means which displays a scene which is visually perceptible by a user person and which is to be controlled by the user person through the interface provision means, wherein a connection may be a wired and/or a wireless connection.

The interface provision means may comprise an assisting display being configured for displaying a visual control aid being visually perceptible by the user person, wherein the visual control aid provides the user person with an indication of captured user input, wherein the visual control aid may be a representation of the user's hand that the user person uses for providing user input.

According to a third aspect of the present invention, a touchless user interface control system, in particular for use in a method according to the first aspect of the present invention, may be provided. The system may comprise an interface provision means according to the second aspect of the present invention and an essentially stationary display means which is configured to display a scene being visually perceptible by a user person, wherein the interface provision means and the essentially stationary display means are spaced apart from each other.

According to a fourth aspect of the present invention, a system or data processing apparatus comprising means for carrying out the method according to the first aspect of the present invention.

According to a fifth aspect of the present invention, a use of at least two depth sensing devices, preferably at least two depth cameras, in a computer-implemented method according to the first aspect of the present invention, is provided.

According to a sixth aspect of the present invention, a computer program or a computer-readable medium may be provided, having stored thereon a computer program, the computer program comprising instructions which, when the program is executed by a computer, cause the computer to carry out the method according to the first aspect of the present invention.

All technical implementation details and advantages described with respect to the first aspect of the present invention are self-evidently mutatis mutandis applicable for the second, third, fourth, fifth and sixth aspects of the present invention and vice versa.

### BRIEF DESCRIPTION OF THE DRAWINGS

The disclosure may be better understood by reference to the following drawings:
- Fig. 1a:: A first schematic illustration of a touchless user interface control system according to embodiments of the present invention.
- Fig. 1b:: A second schematic illustration of a touchless user interface control system according to embodiments of the present invention.
- Fig. 2a:: A first schematic illustration of an interface provision means according to embodiments of the present invention.
- Fig. 2b:: A second schematic illustration of an interface provision means according to embodiments of the present invention.
- Fig. 3:: A third schematic illustration of an interface provision means according to embodiments of the present invention.
- Fig. 4a:: A fourth schematic illustration of an interface provision means according to embodiments of the present invention.
- Fig. 4b:: A fifth schematic illustration of an interface provision means including a user person providing touchless user input according to embodiments of the present invention.
- Fig. 5a:: A sixth schematic illustration of an interface provision means according to embodiments of the present invention.
- Fig. 5b:: A seventh schematic illustration of an interface provision means including a user person providing touchless user input according to embodiments of the present invention.
- Fig. 6:: An eighth schematic illustration of an interface provision means according to embodiments of the present invention.

### DETAILED DESCRIPTION

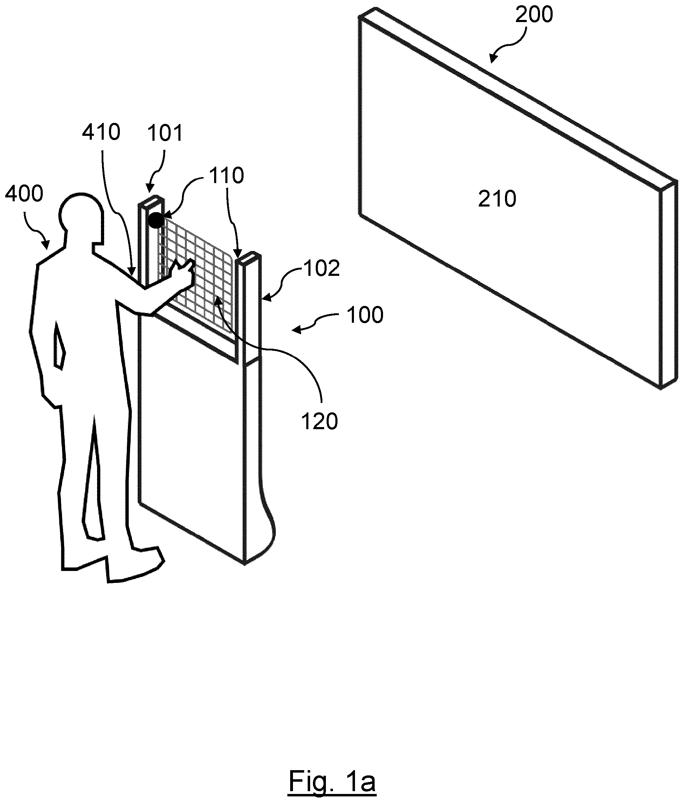

Figure 1a is a first schematic illustration of a touchless user interface control system showing an interface provision means 100 comprising two depth sensing devices 110 which are integrated or mounted facing each other and observing a spatial input area 120. The spatial input area 120 serves as a spatial user interface enabling a user person 400 to provide touchless user input to a scene 210 displayed by an essentially stationary display means 200. In particular, the user person 400 may provide touchless user input using an input object 410, such as one hand or finger. The spatial input area 120 is illustrated as a grid for the sake of comprehensibility.

The interface provision means 100 comprises an essentially vertical left tower 101 and an essentially vertical right tower 102, wherein the left and the right towers oppose each other such that the spatial input area 120 is located between the left tower 101 and the right tower 102. The depth sensing devices 110 are in particular integrated in the towers 101, 102.

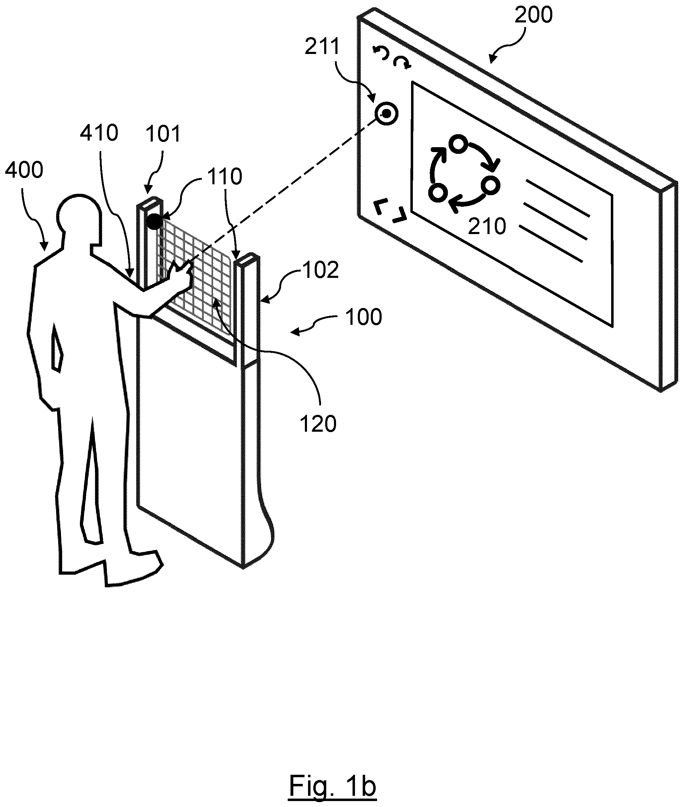

Figure 1b is a second schematic illustration of a touchless interface control system, similar to figure 1a. Compared to figure 1a, figure 1b shows a specific scene 210 including content and control elements, e.g., a back and forth button. Further, figure 1b depicts a hovering pointer 211, i.e., cursor which may support the user person 400 during interaction.

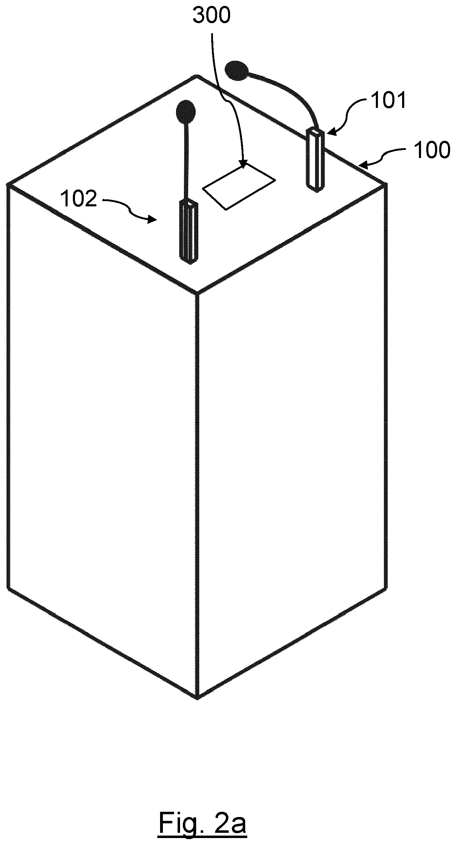

Figure 2a is a first schematic illustration of an interface provision means 100 including a left tower 101 and a right tower 102. Further, figure 2a shows an assisting display 300. The assisting display 300 may, during user interaction, display a visual control aid being visually perceptible by the user person 400. The visual control aid may provide the user with an indication of captured user input. For example, the visual control aid may have the shape of a hand representing the user's hand 410.

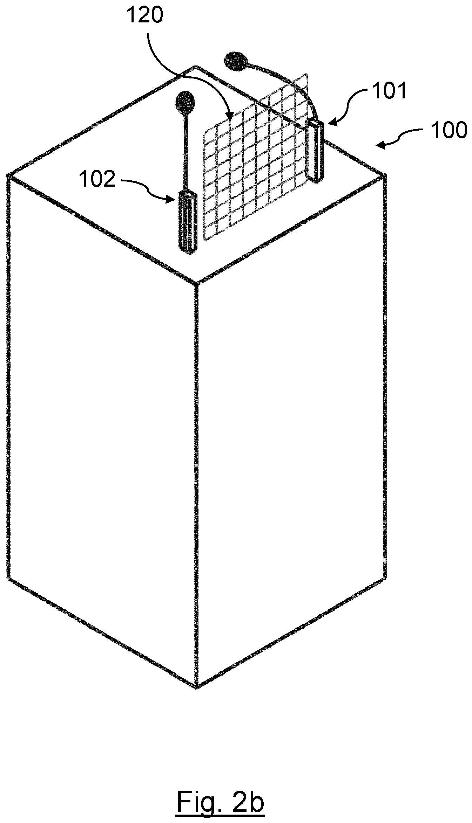

Figure 2b is a second schematic illustration of an interface provision means 100 including a visualization of the spatial input area 120. The spatial input area 120 is partially, at its left and right side, limited by the left and right towers 101, 102 in order to make its position recognizable for the user person 400.

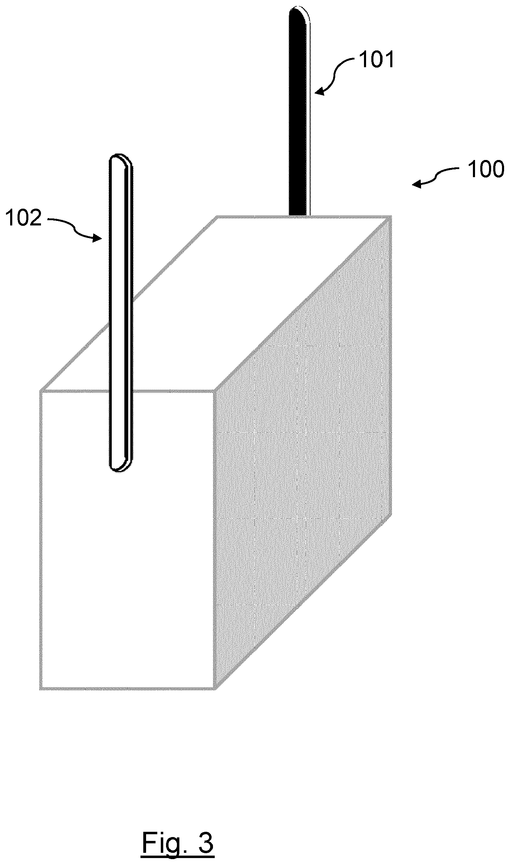

Figure 3 is a third schematic illustration of an interface provision means 100 having an alternative shape.

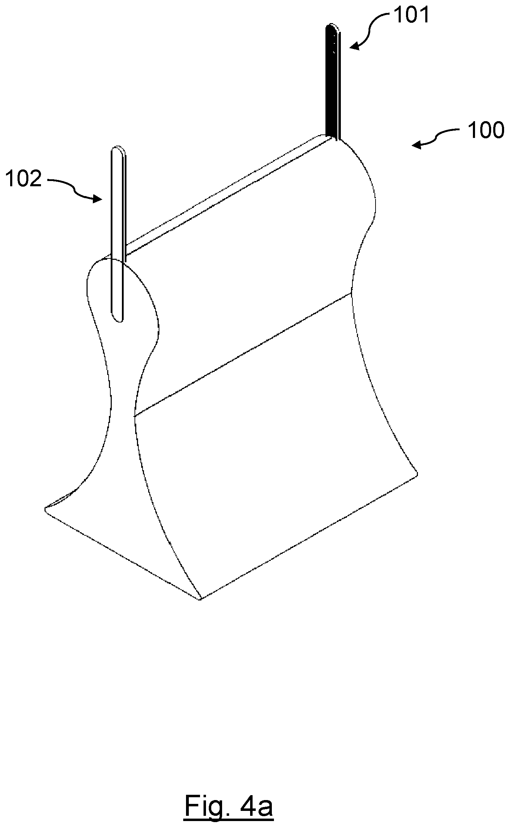

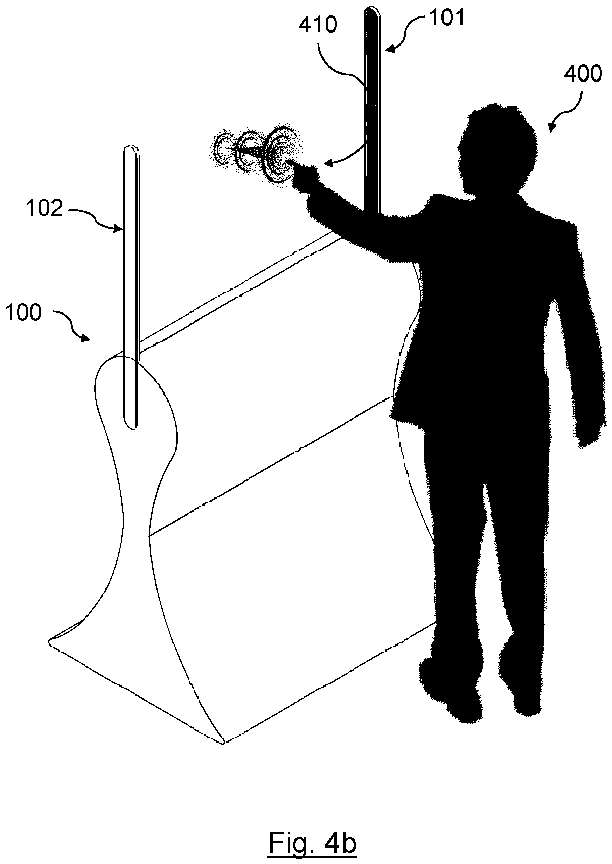

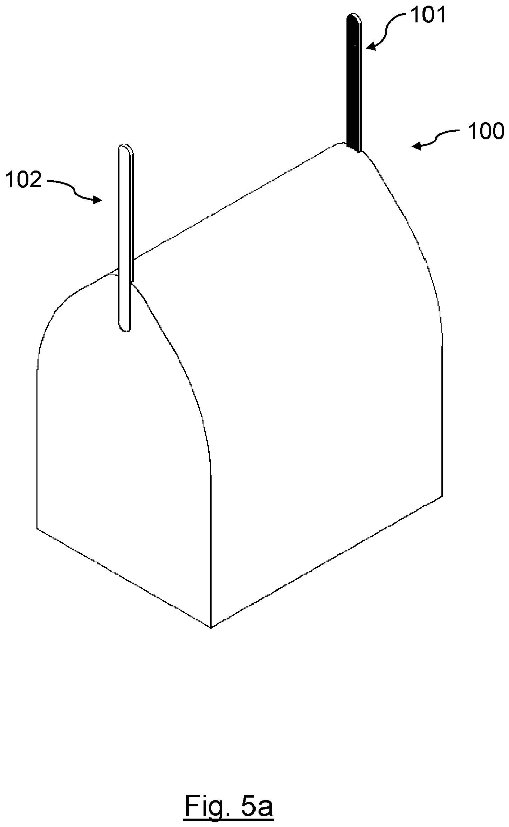

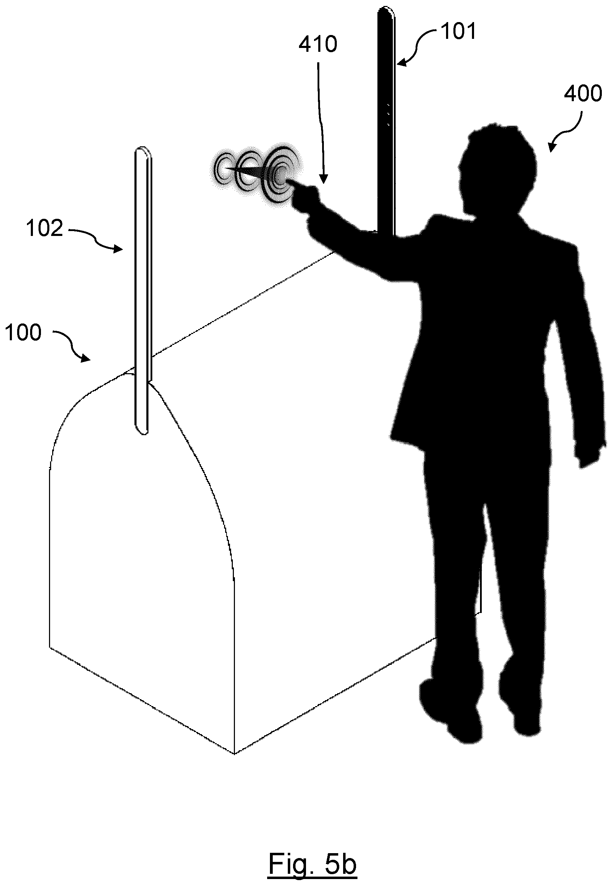

Figure 4a is a fourth schematic illustration of an interface provision means 100 having an alternative shape. Figure 4b, as a fifth schematic illustration of an interface provision means 100, additionally depicts a user person 400 providing touchless user input using the user person's hand 410. Similarly, Figure 5a is a sixth schematic illustration of an interface provision means 100 having an alternative shape while figure 5b, as a seventh schematic illustration of an interface provision means 100, additionally depicts a user person 400 providing touchless user input using the user person's hand 410.

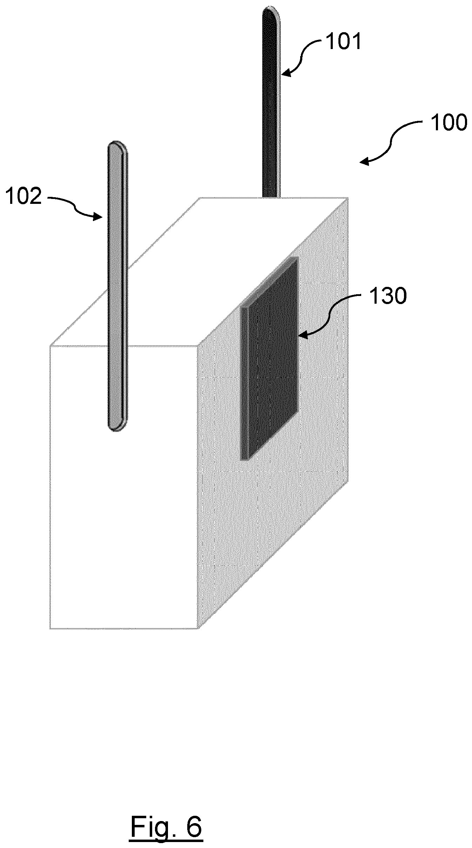

Figure 6 is an eighth schematic illustration of an interface provision means 100 further including a control unit 130 which is configured to process captured image data of the depth sensing device(s) 110 in order to generate control commands based on the captured touchless user input and modifying the displayed scene 210 in accordance with the control commands.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some or all of the method steps may be executed by (or using) a hardware apparatus, such as a processor, a microprocessor, a programmable computer or an electronic circuit. Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments of the invention provide a data carrier having electronically readable control signals, which are capable of cooperating with a programmable computer system, such that one of the methods described herein is performed.

Generally, embodiments of the invention can be implemented as a computer program (product) with a program code, the program code being operative for performing one of the methods when the computer program product runs on a computer. The program code may, for example, be stored on a machine-readable carrier. Other embodiments comprise the computer program for performing one of the methods described herein, stored on a machine-readable carrier. In other words, an embodiment of the present invention is, therefore, a computer program having a program code for performing one of the methods described herein, when the computer program runs on a computer.

A further embodiment of the invention provides a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention provides a data stream or a sequence of signals representing the computer program for performing one of the methods described herein. The data stream or the sequence of signals may, for example, be configured to be transferred via a data communication connection, for example, via the internet.

A further embodiment of the invention provides a processing means, for example, a computer or a programmable logic device, configured to, or adapted to, perform one of the methods described herein.

A further embodiment of the invention provides a computer having installed thereon the computer program for performing one of the methods described herein.

A further embodiment of the invention provides an apparatus or a system configured to transfer (e.g., electronically or optically) a computer program for performing one of the methods described herein to a receiver. The receiver may, for example, be a computer, a mobile device, a memory device, or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### REFERENCE SIGNS

- 100: interface provision means
- 101: left tower
- 102: right tower
- 110: depth sensing device
- 120: spatial input area
- 130: control unit
- 200: display means
- 210: scene
- 211: pointer
- 300: assisting display
- 400: user person
- 410: input object, e.g., hand

## Claims

1. A computer-implemented touchless user interface control method, the method comprising:
providing, using an interface provision means (100), a spatial input area (120) serving as a spatial user interface enabling a user person (400) to provide touchless user input to a scene (210) displayed by an essentially stationary display means (200), the scene being visually perceptible by the user person (400), wherein the position of the spatial input area (120) in space is at least partially made recognizable for the user person (400), wherein the interface provision means (100) is spaced apart from the display means (200);
observing, using at least one depth sensing device (110) preferably being integrated in the interface provision means (100), the spatial input area (120) and capturing the touchless user input performed by the user person (400); and
generating at least one control command based on the captured touchless user input and modifying the displayed scene (210) in accordance with the at least one control command.

2. The computer-implemented method of any one of the preceding claims, wherein the interface provision means (100) comprises an assisting display (300), the assisting display (300) displaying a visual control aid being visually perceptible by the user person (400), wherein the visual control aid provides the user person (400) with an indication of captured user input, optionally wherein the visual control aid is a representation of a user person's hand that the user person uses for providing user input.

3. The computer-implemented method of any one of the preceding claims, wherein the interface provision means (100) is or comprises a physical framing having a shape that at least partially frames the spatial input area (120).

4. The computer-implemented method of claim 3, wherein the physical framing comprises an essentially vertical left tower (101) and an essentially vertical right tower (102), wherein the left and the right tower (101, 102) oppose each other such that the spatial input area (120) is located between the left tower (101) and the right tower (102), optionally wherein at least one depth sensing device (110) is integrated in the left tower (101) and/or at least one depth sensing device (110) is integrated in the right tower (102).

5. The computer-implemented method of any one of the preceding claims, wherein the interface provision means (100) comprises a projector, preferably a laser projector and/or a hologram projector, the projector emitting light at least partially being indicative of the location of the spatial input area (120).

6. The computer-implemented method of any one of the preceding claims, wherein the interface provision means (100) comprises an augmented reality device, preferably a wearable augmented reality device such as an augmented reality glasses, the augmented reality device providing an indication to the user person (400) at least partially being indicative of the location of the spatial input area (120).

7. The computer-implemented method of any one of the preceding claims, wherein the interface provision means (100), preferably including the at least one depth sensing device (110), is operable in a sleep-mode and in an active-mode, wherein in the sleep-mode, the interface provision means (100) is at least partially deactivated in order to save energy and switches into the active-mode in response to a wakeup user action, optionally wherein the interface provision means (100) automatically switches from the active-mode into the sleep-mode after a predetermined time period of inactivity and/or in response to a sleep user action.

8. The computer-implemented method of any one of the preceding claims, wherein the spatial input area (120) is or comprises a virtual plane defined in space which virtual plane may form a virtual touchpad which does not require physical touch during a user interaction.

9. The computer-implemented method of claim 8, wherein during a user interaction where touchless user input is captured which is provided by the user person (400) via an input object (410), preferably via a hand of the user person (400), the captured distance of the input object (410) with respect to the virtual plane and the position of the input object (410) relative to the plane and/or the movement of the input object (410) relative to the plane is processed and generating at least one control command is performed based thereon.

10. The computer-implemented method of any one of the preceding claims, wherein one or more of the following types of control commands may be generated based on user input:
hovering pointer commands causing modifying the displayed scene (210) by displaying a hovering pointer (211) which overlays the scene (210) in a respective position, preferably wherein a captured user input is determined to be a hovering pointer command if the user person (400) points with at least a portion of the user person's hand within the spatial input area (120);
gesture input commands, such as click input commands, causing modifying the displayed scene (210) in that said scene (210) changes according to the gesture, preferably wherein a captured user input is determined to be a gesture input command if the user person (400) performs a gesture movement with the user person's hand within the spatial input area (120).

11. The computer-implemented method of any one of the preceding claims, wherein the spatial input area (120), preferably being defined as a virtual plane defined in space, is mapped to the displayed scene (210) and captured user input is mapped accordingly.

12. An interface provision means, in particular for use in a method according to any one of the preceding claims, comprising:
at least two depth sensing devices (110) being arranged essentially opposing each other and being configured for observing a spatial input area (120) and for capturing touchless user input performed by a user person (400);
at least one interface indication means (100) being configured to provide an indication to the user person (400) at least partially being indicative of the location of the spatial input area (120), wherein the interface indication means (100) preferably includes one or more of the following:
a physical framing having a shape that at least partially frames the spatial input area (120), preferably an essentially vertical left tower (101) and an essentially vertical right tower (102), wherein the left and the right tower (101, 102) oppose each other such that the spatial input area (120) is located between the left tower (101) and the right tower (102), optionally wherein in each of the towers (101, 102) at least one of the at least two depth sensing devices (110) may be mounted or integrated;
a projector, preferably a laser projector and/or a hologram projector, the projector emitting light at least partially being indicative of the location of the spatial input area (120),
an augmented reality device, preferably a wearable augmented reality device such as an augmented reality glasses, the augmented reality device providing an indication to the user person at least partially being indicative of the location of the spatial input area (120);
a connection interface for connecting a control unit (130), e.g., a computer, and/or a connection interface for connecting an essentially stationary display means (200) which displays a scene (210) which is visually perceptible by a user person (400) and which is to be controlled by the user person (400) through the interface provision means (100), wherein a connection may be a wired and/or a wireless connection;
optionally an assisting display (300) being configured for displaying a visual control aid being visually perceptible by the user person (400), wherein the visual control aid provides the user person with an indication of captured user input, wherein the visual control aid may be a representation of the user's hand that the user person uses for providing user input.

13. A touchless user interface control system, in particular for use in a method according to any one of the preceding claims, comprising an interface provision means (100) according to claim 12 and an essentially stationary display means (200) which is configured to display a scene (210) being visually perceptible by a user person (400), wherein the interface provision means (100) and the essentially stationary display means (200) are spaced apart from each other.

14. A system or data processing apparatus comprising means for carrying out the method of any one of claims 1-11.

15. A computer program or a computer-readable medium having stored thereon a computer program, the computer program comprising instructions which, when the program is executed by a computer, cause the computer to carry out the method of any one of claims 1-11.
